# EUROPÄISCHE PATENTSCHRIFT

(11) **EP 3 346 163 B1**
(45) Veröffentlichungstag und Bekanntmachung des Hinweises auf die Patenterteilung: **01.07.2020**
(21) Anmeldenummer: 17209841.0
(22) Anmeldetag: 21.12.2017
(51) Int. Cl.: F16H 55/14, F16H 57/12

(54) **ZAHNRAD SOWIE ZAHNRADANORDNUNG EINER BRENNKRAFTMASCHINE**
GEAR WHEEL AND TOOTHED WHEEL ARRANGEMENT OF A COMBUSTION ENGINE
ROUE DENTÉE AINSI QUE SYSTEME FORMANT ROUE DENTÉE D'UN MOTEUR A COMBUSTION INTERNE

(30) Priorität: 04.01.2017 DE 102017100067
(43) Veröffentlichungstag der Anmeldung: 11.07.2018
(73) Patentinhaber: VOLKSWAGEN AKTIENGESELLSCHAFT, 38440 Wolfsburg (DE)
(72) Erfinder: Cornelius, Volker, 38162 Cremlingen (DE); Oppermann, Norbert, 38440 Wolfsburg (DE)
(74) Vertreter: Freischem & Partner Patentanwälte mbB

(56) Entgegenhaltungen:
- DE-A1-102013 008 484
- DE-U1- 9 209 432
- DE-U1-202006 017 591
- US-A1- 2001 010 109

## Beschreibung

Die Erfindung betrifft ein Zahnrad gemäß dem Oberbegriff des Anspruchs 1, insbesondere ein Zahnrad, das Teil einer Brennkraftmaschine ist. Ferner betrifft die Erfindung eine Zahnradanordnung einer Brennkraftmaschine mit einem solchen Zahnrad, insbesondere eine Zahnradanordnung, beispielsweise in einer Brennkraftmaschine mit einer Kurbelwelle und mindestens einer Ausgleichwelle, die über die Zahnradanordnung funktional mit der Kurbelwelle gekoppelt ist.

Aus EP 0 303 113 B1 ist ein Verfahren zur Herstellung eines geräuscharmen Zahnrades bekannt, wobei ein erster wellenseitiger radial innerer ringförmiger Nabenteil aus einem Thermoplast mit hoher mechanischer Festigkeit und geringem Dämpfungsfaktor gespritzt wird. Anschließend wird auf den Umfang des Nabenteils ein ringförmiger äußerer Zahnkranzteil aus einem Thermoplast mit hohem Dämpfungsfaktor und geringer mechanischer Festigkeit aufgespritzt. Das innere Nabenteil soll insbesondere aus einem Polyamid-Thermoplast sein, und das äußere Zahnkranzteil soll insbesondere aus einem Polyacetat-Therrnoplast hergestellt sein. Das Dokument bezieht sich insbesondere auf die Herstellung eines auf einer Getriebewelle eines Getriebemotors befestigten Schneckenrades, das in Verbundbauweise hergestellt wird.

Aus DE 20 2006 017 591 U1 ist ein Zahnrad aus Kunststoff mit einer Antriebsseite und einer Abtriebsseite bekannt, wobei zwischen der Antriebsseite und der Abtriebsseite Mittel angeordnet sind, die eine Relativbewegung, insbesondere ein Verdrehen, der Antriebsseite und der Abtriebsseite zulassen. Die zwischen der Antriebsseite und Abtriebsseite angeordneten Mittel sind aus einem ersten Kunststoff gebildet, der elastischer ist als ein zweiter Kunststoff, aus dem zumindest die Antriebsseite gebildet ist. Als Mittel können sich in rein radialer Richtung erstreckende Stege und/oder Formkörper ausgebildet sein, die kissenartig sind oder Hohlräume aufweisen. Als erster Kunststoff für die Mittel eignen sich unter anderem Elastomere. Als zweiter Kunststoff werden unter anderem Thermoplaste verwendet.

Aus DE 10 2013 008 484 A1 ist eine temperaturbelastete Zahnradanordnung mit einem ersten Zahnrad und einem zweiten Zahnrad bekannt. Mindestens ein Zahnrad weist dabei mindestens einen sich zumindest teilweise in Umfangsrichtung erstreckenden Steg als Federmittel auf, um eine elastische Verformung in radialer Richtung zu ermöglichen. In DE 10 2013 008 484 A1 sind insoweit Zahnräder gemäß dem Oberbegriff des Anspruchs 1 beschrieben. Auf die relevanten Inhalte der DE 10 2013 008 484 A1 wird insoweit explizit Bezug genommen. Die Erfindung lässt sich mit jedem in DE 10 2013 008 484 A1 beschriebenen Zahnrad realisieren, das unter den Oberbegriff des Anspruchs 1 fällt, auch wenn eine entsprechende Ausführungsform im Folgenden nicht noch einmal explizit beschrieben und/oder dargestellt wird.

Aus US 2001/0010109 A1 ist ein Zahnrad bekannt, welches insbesondere in einer Anordnung zum Hoch- und Herunterfahren eines Fensters für ein Kraftfahrzeug eingesetzt werden soll. Das Zahnrad weist einen inneren Ring, einen äußeren Ring und sich dazwischen erstreckende Stege auf, wobei der innere Ring, der äußere Ring und die Stege einstückig aus einem Polymer hergestellt sind.

Der Erfindung liegt die Aufgabe zugrunde, ein Zahnrad und eine Zahnradanordnung zur Verfügung zu stellen, welche bei unterschiedlichen Temperaturbelastungen gleichzeitig gute mechanische und akustische Eigenschaften aufweisen. Insbesondere sollen die in DE 10 2013 008 484 A1 beschriebenen Zahnräder, welche sich zumindest teilweise in Umfangsrichtung erstreckende Stege aufweisen, hinsichtlich ihrer akustischen Eigenschaften verbessert werden.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Zahnrad weist einen äußeren Ring und einen inneren Ring auf, wobei zwischen dem äußeren Ring und dem inneren Ring mindestens ein sich zumindest teilweise in Umfangsrichtung erstreckender Steg zur Erzielung einer Elastizität in radialer Richtung des Zahnrades ausgebildet ist. Durch den sich zumindest teilweise in Umfangsrichtung erstreckenden Steg ist in radialer Richtung des mindestens einen Steges mindestens ein Freiraum ausgebildet. Der mindestens eine Freiraum ist dabei zumindest teilweise mit einem dämpfenden Füllmaterial gefüllt. Der äußere Ring, der innere Ring und der mindestens eine Steg sind einstückig aus einem Metallwerkstoff hergestellt. Vorzugsweise sind mehrere Stege vorgesehen, welche sich spiralförmig von dem inneren Ring zu dem äußeren Ring erstrecken. Die Stege ermöglichen dabei, dass sich der äußere Ring relativ zu dem inneren Ring verschieben kann bzw. dass sich der Abstand zwischen dem äußeren Ring und dem inneren Ring durch elastische Verformung verkleinern kann. Bezüglich der Gestaltung entsprechender Zahnräder und Stege wird vollumfänglich auf die Offenbarung von DE 10 2013 008 484 A1 verwiesen. Insbesondere wird explizit darauf hingewiesen, dass es sich bei dem inneren Ring auch um einen Ring aus Vollmaterial handelt kann, d.h. um eine kreisringförmige innere Vollwelle.

Vorzugsweise ist ein erfindungsgemäßes Zahnrad so ausgelegt, dass der äußere Ring, der innere Ring und die Stege eine Tragstruktur bilden, die dem Zahnrad einerseits eine Formstabilität verleihen, es jedoch andererseits ermöglichen, dass zwischen dem äußeren Ring und dem inneren Ring eine Elastizität vorhanden ist. Dabei ist das Zahnrad vorzugsweise so ausgelegt, dass die Elastizität des äußeren Rings in radialer Richtung über den gesamten Umfang des Zahnrades möglichst gleichmäßig ausgebildet ist. Die Elastizität in radialer Richtung dient dazu, dass das Zahnrad jeweils dort ausgleichend wirken kann, wo es mit einem anderen Zahnrad kämmt und sich im Betrieb - temperaturbedingt oder aus anderen Gründen - Achsabstandsänderungen ergeben können. Für die Ausbildung des inneren Rings, des äußeren Rings und/oder des mindestens einen Steges bzw. aller Stege wird vorzugsweise ein Metallwerkstoff oder ein alternativer Werkstoff mit einer ähnlich hohen Festigkeit verwendet.

Für das Füllmaterial wird vorzugsweise ein Nichtmetallwerkstoff verwendet, insbesondere ein Elastomer oder ein thermoplastischer Kunststoff.

Die Stege werden vorzugsweise so ausgebildet, dass diese von dem äußeren Ring zu dem inneren Ring eine zumindest im Wesentlichen gleichbleibende Breite aufweisen, wobei mit der Breite die Richtung senkrecht zur jeweiligen Haupterstreckungsrichtung des Steges gemeint ist. Mit einer im Wesentlichen gleichbleibenden Breite ist insbesondere gemeint, dass die Breite zwischen dem Bereich mit der geringsten Breite und dem Bereich mit der größten Breite maximal das 5-fache, bevorzugt maximal das 3-fache, besonders bevorzugt maximal das 2-fache beträgt. In der Praxis beträgt dieser Wert häufig sogar nur maximal das 1,5-fache, maximal das 1,2-fache oder maximal das 1,1-fache, d.h. die Breite des mindestens einen Steges ist im gesamten Verlauf von dem äußeren Ring zu dem inneren Ring ungefähr gleich groß.

Ebenfalls bevorzugt ist es, wenn die Haupterstreckungsrichtung jedes Steges zumindest in einem Teilabschnitt in einem Winkel von mindestens 30°, bevorzugt mindestens 45° und weiter bevorzugt mindestens 60°, mindestens 70° oder mindestens 80° gegenüber der rein radialen Richtung verläuft. Bei einem Winkel der Haupterstreckungsrichtung eines Steges von 90° gegenüber der rein radialen Richtung, der auch möglich ist, verläuft der Steg in dem entsprechenden Teilabschnitt genau in Umfangsrichtung.

Vorzugsweise weist ein erfindungsgemäßes Zahnrad zwei Stege, drei Stege, vier Stege, fünf Stege, sechs Stege oder mehr Stege auf. Unabhängig davon weisen mehrere Stege vorzugsweise alle die gleiche Geometrie auf. Wiederum unabhängig davon sind mehrere Stege vorzugsweise gleichmäßig über den Umfang verteilt angeordnet, d.h. bei einem Zahnrad mit insgesamt vier Stegen sind die Stege vorzugsweise um jeweils 90° versetzt zueinander angeordnet.

Durch die gezielte Anordnung von dämpfendem Füllmaterial in dem mindestens einen Freiraum zwischen dem äußeren Ring und dem inneren Ring werden Schwingungen, die bei den vorstehend beschriebenen radialen Einfederbewegungen entstehen, zwangsweise in das Füllmaterial eingeleitet und dort mit hohem Wirkungsgrad gedämpft. Es erfolgt damit eine effiziente akustische Entkopplung des äußeren Rings von dem inneren Ring, so dass Geräusche, die in einem - in radialer Richtung des Zahnrades betrachtet - Bereich außerhalb des äußeren Rings aufgrund eines Zahneingriffs entstehen, nicht oder nur stark gedämpft zu dem inneren Ring geleitet werden. Auf das Zahnrad von außen einwirkende Schwingungen und Geräusche können so in dem Bereich zwischen dem äußeren Ring und dem inneren Ring mittels des Füllmaterials sehr gut gedämpft und absorbiert werden. Besonders geeignet ist ein erfindungsgemäßes Zahnrad insoweit für Zahnradanordnungen, in welchen sich während des Betriebes die Achsabstände zwischen zwei Zahnrädern ändern können. In solchen Fällen kann mit mindestens einem erfindungsgemäßen Zahnrad eine erhebliche akustische Verbesserung bei gleichzeitig flexibler Ausgleichsfähigkeit der Zahnradanordnung erreicht werden.

Das Zahnrad ist besonders einfach und kostengünstig herstellbar, da der äußere Ring, der innere Ring und der mindestens eine Steg (bei mehreren Stegen alle Stege) einstückig aus einem Metallwerkstoff hergestellt sind. Die Tragstruktur des erfindungsgemäßen Zahnrades kann in diesem Fall einstückig, insbesondere mittels eines geeigneten Gussverfahrens oder als Sinterteil, hergestellt werden. Als besonders geeignete Metallwerkstoffe wird insbesondere auf Stahl und Aluminium sowie Legierungen aus diesen Werkstoffen verwiesen.

In einer praktischen Ausführungsform erstreckt sich der mindestens eine Steg über einen Umfangsbereich von mindestens 20°. Mit dem Umfangsbereich ist ein sich über den Winkel von mindestens 20° erstreckendes Winkelsegment des erfindungsgemäßen Zahnrades gemeint. Weiter bevorzugt erstreckt sich der mindestens eine Steg über einen Umfangsbereich von mindestens 30°, mindestens 40°, mindestens 50° oder besonders bevorzugt über mindestens 80° oder 90°. Je weiter sich der mindestens eine Steg in Umfangsrichtung erstreckt, umso mehr kann sich der äußere Ring relativ zu dem inneren Ring bewegen. Ein weiterer Vorteil eines größeren Umfangsbereiches ist, dass der Steg durch die vergleichsweise lange Steglänge mit größerer Amplitude überwiegend in radialer Richtung schwingt, und so die Schwingungen besser an das dämpfende Füllmaterial abgegeben werden können, bzw. die Schwingungen umso besser gedämpft werden können.

Betreffend die Stege eines erfindungsgemäßen Zahnrades und die damit verbundene gleichmäßige Elastizität in radialer Richtung ist es besonders bevorzugt, wenn durch jedes Winkelsegment eines Zahnrades mindestens ein Steg verläuft, d.h. wenn ausgehend von einer Mittelachse des Zahnrades jede in rein radialer Richtung verlaufende Gerade mindestens einen Steg schneidet. Mit Zahnrädern, bei welchen als maximaler Abstand zwischen zwei benachbarten Stegen ein Winkelsegment von maximal 10°, 20° oder 30° verläuft, werden jedoch ebenfalls noch sehr gute Ergebnisse erzielt.

Mehrere Stege können auch sich teilweise überlappend angeordnet sein, so können beispielsweise vier Stege jeweils so angeordnet sein, dass sie jeweils 90° zueinander versetzt am äußeren Ring beginnen und sich jeweils über ein Winkelsegment von 110° erstrecken. In diesem Fall ergibt sich jeweils eine Überlappung über ein Winkelsegment von 20° zwischen zwei benachbarten Stegen.

Als besonders geeignete dämpfende Füllmaterialien werden nichtmetallische Werkstoffe angesehen. Insbesondere eignen sich als dämpfende Füllmaterialien Stahlwolle, natürliche Füllmaterialien, Kunststoffe, vorzugsweise thermoplastische Kunststoffe oder Elastomere und insbesondere Silikon oder HNBR, Diese Materialien besitzen besonders gute dämpfende Eigenschaften und lassen sich leicht und kostengünstig verarbeiten.

Eine besonders gute Dämpfung wird bei erfindungsgemäßen Zahnrädern erreicht, bei welchen als Dämpfungsmaterial eine homogene Masse, insbesondere aus einem nichtmetallischen Werkstoff, mit einer Shore-Härte (Typ A) zwischen 10 und 80 in den mindestens einen Freiraum gefüllt ist. Bevorzugt liegt die Shore-Härte (Typ A) zwischen 20 und 60 und besonders bevorzugt zwischen 30 und 50. Mit Werkstoffen solcher Shore-Härten wird eine besonders gute Schwingungsdämpfung erzielt, ohne dass sich das Füllmaterial negativ auf die Elastizität der Tragstruktur auswirkt.

In einer weiteren praktischen Ausführungsform weist die Federsteifigkeit eines erfindungsgemäßen Zahnrades in radialer Richtung über den gesamten Umfang jeweils einen Wert zwischen 5.000 und 15.000 N/mm. Vorzugsweise liegt die Federsteifigkeit über den gesamten Umfang an jedem Punkt zwischen 8.000 und 12.000 N/mm. Es hat sich gezeigt, dass eine solche Auslegung des erfindungsgemäßen Zahnrades eine bevorzugte Kombination aus Formstabilität und Elastizität in radialer Richtung darstellt, insbesondere wenn das Zahnrad drehfest mit der Kurbelwelle einer Brennkraftmaschine oder drehfest mit einer Ausgleichwelle einer Brennkraftmaschine ist oder wenn das Zahnrad ein Zwischenrad ist, das mit einem Zahnrad der Kurbelwelle und einem Zahnrad einer Ausgleichswelle kämmt. Mit einem derartigen Zahnrad lassen sich ausreichend große Drehmomente übertragen und zugleich durch eine ausgebildete Elastizität in radialer Richtung Achsabstandsveränderungen ausgleichen, um akustische Auffälligkeiten in allen Betriebszuständen zu vermeiden.

Unabhängig von den vorstehenden absoluten Werteangaben für die Federsteifigkeit ist es bevorzugt, wenn die Abweichung der Federsteifigkeit über den gesamten Umfang eines erfindungsgemäßen Zahnrades vorzugsweise maximal 20 % beträgt, weiter bevorzugt maximal 10 % und besonders bevorzugt maximal 8 %. Mit den beschriebenen Auslegungen der Federsteifigkeit kann sichergestellt werden, dass ein erfindungsgemäßes Zahnrad, insbesondere bei bestimmten Resonanzdrehzahlen, aufgrund von über den Umfang variierenden Elastizitäten in radialer Richtung nicht selbst zu schwingen beginnt und so durch Wechselwirkung mit einem oder mehreren mit diesem kämmenden Zahnrädern ungewünschte Geräusche und/oder Wechselbeanspruchungen erzeugt.

Möglichst einfach und kostengünstig lässt sich das Füllmaterial in dem mindestens einen Freiraum anordnen und/oder fixieren, wenn das Füllmaterial in den Freiraum eingespritzt, vulkanisiert und/oder montiert ist. Durch Einspritzen und Vulkanisieren kann in den meisten Fällen bereits eine für die Nutzungsdauer ausreichende feste Verbindung zwischen dem äußeren Ring, dem Steg bzw. den Stegen und/oder dem inneren Ring erzielt werden.

Das Montieren von Füllmaterial ist auch möglich und insbesondere dann bevorzugt, wenn ein Vulkanisieren oder Einspritzen aus bestimmten Gründen umständlich oder teuer ist, beispielsweise weil das verwendete Füllmaterial bei der Verarbeitung fließt und der im Zahnrad zu befüllende Freiraum keine, das Herausfließen des Materials verhindernde Begrenzungswände aufweist, so dass für das Aushärten des Füllmaterials innerhalb des Zahnrades aufwändige Abdichtmaßnahmen erforderlich sind.

Als Füllmaterial wird insbesondere ein bis mindestens 150° temperaturstabiler Werkstoff eingesetzt. Damit eignet sich ein erfindungsgemäßes Zahnrad auch für Zahnradanordnungen, die in unmittelbarer Umgebung einer Brennkraftmaschine angeordnet sind, insbesondere einer Brennkraftmaschine eines Kraftfahrzeuges. Ein erfindungsgemäßes Zahnrad kann dann beispielsweise ein drehfest mit einer Kurbelwelle oder einer Ausgleichswelle einer Brennkraftmaschine verbundenes Element oder ein zwischen solchen Wellen eingesetztes Zwischenrad sein.

Zusätzlich ist es vorteilhaft, wenn das Füllmaterial ölbeständig ist, das heißt, wenn das Füllmaterial in seinen für den Einsatzzweck relevanten Eigenschaften nicht durch den Kontakt mit Öl beeinträchtigt wird.

Als geeignete Werkstoffe für Füllmaterial wird in diesem Zusammenhang insbesondere auf Polymere und Elastomere verwiesen, insbesondere auf Silikone und HNBR, die kostengünstig verfügbar sind und für erfindungsgemäße Zahnräder vorteilhafte Dämpfungseigenschaften aufweisen.

In einer weiteren praktischen Ausführungsform beträgt der rein radiale Abstand zwischen dem mindestens einen Steg und dem inneren Ring und/oder der rein radiale Abstand zwischen dem mindestens einen Steg und dem äußeren Ring in sich zumindest teilweise in Umfangsrichtung erstreckenden Bereichen mindestens 1,5 mm. Vorzugsweise beträgt der Abstand in sich radial erstreckenden Bereichen mindestens 2 mm und weiter vorzugsweise mindestens 2,5 mm. Falls mehrere Stege vorgesehen sind, so beträgt der Abstand aller Stege im unbelasteten Zustand des Zahnrades ebenfalls mindestens 1,5 mm. Derartige Abstände erleichtern insbesondere die Herstellung im Sinterverfahren, weil dann ohne besondere Sicherheitsmaßnahmen oder Nachbearbeitungen der äußere Ring, die Stege und der innere Ring in allen Bereichen sicher separiert ausbildbar sind.

Die Erfindung betrifft auch eine Zahnradanordnung einer Brennkraftmaschine mit einer Kurbelwelle und mindestens einer Ausgleichswelle. Dabei ist mindestens ein drehfest mit der Kurbelwelle oder ein drehfest mit der Ausgleichswelle verbundenes Zahnrad oder ein zwischen der Ausgleichswelle und der Kurbelwelle als Zwischenrad angeordnetes Zahnrad ein wie vorstehend beschriebenes erfindungsgemäßes Zahnrad. Es wird insoweit auch auf Brennkraftmaschinen mit einer solchen Zahnradanordnung verwiesen, insbesondere solche, bei denen die Kurbelwelle mit einer ersten Ausgleichwelle direkt über eine Zahnradanordnung gekoppelt ist und mit einer zweiten Ausgleichswelle über ein Zwischenrad, das mit einem mit der Kurbelwelle drehfest verbundenen Zahnrad und mit einem mit der zweiten Ausgleichwelle verbundenen Zahnrad kämmt. Es hat sich gezeigt, dass es ausreichend ist, wenn nur ein Zahnrad einer Zahnradanordnung erfindungsgemäß ausgebildet ist, um die akustischen Eigenschaften einer Brennkraftmaschine signifikant zu verbessern, insbesondere in extremen Betriebszuständen, bei denen der Achsabstand zwischen zwei miteinander kämmenden Zahnrädern besonders groß oder besonders klein ist.

Bei niedrigen Temperaturen vergrößert sich üblicherweise das Zahnflankenspiel einer Zahnradanordnung, was zu einem sogenannten "Klingeln" führen kann, wenn kein erfindungsgemäßes Zahnrad im Einsatz ist. Bei hohen Temperaturen und einem verringerten Zahnflankenspiel kann es zu einer Geräuschbildung kommen, die als "Pfeifen" oder "Singen" bezeichnet wird, wenn kein erfindungsgemäßes Zahnrad eingesetzt wird. Durch die Verwendung mindestens eines erfindungsgemäßen Zahnrades können "Klingeln" und "Pfeifen" bzw. "Singen" in vielen Anwendungsfällen vollständig oder zumindest überwiegend vermieden werden. Ferner werden unerwünschte Schwingungen von einem erfindungsgemäßen Zahnrad wesentlich stärker absorbiert, was sich auch positiv auf die Lagerung der Zahnräder auswirkt. Vorzugsweise ist aus Kostengründen nur genau eines von zwei miteinander in Eingriff stehenden Zahnrädern ein erfindungsgemäßes Zahnrad.

Der Vollständigkeit halber wird darauf verwiesen, dass durch die Entwicklung und Verwendung erfindungsgemäßer Zahnräder die in einer Brennkraftmaschine auftretende Geräuschentwicklung um 4-6 dB und somit signifikant reduziert werden konnte.

Weitere praktische Ausführungsformen der Erfindung sind nachfolgend im Zusammenhang mit den Zeichnungen beschrieben. Es zeigen:
- Fig. 1: eine erste Ausführungsform eines erfindungsgemäßen Zahnrades in einer perspektivischen Ansicht von schräg vorne,
- Fig. 2: eine zweite Ausführungsform eines erfindungsgemäßen Zahnrades in einer perspektivischen Ansicht von schräg vorne,
- Fig. 3: eine erfindungsgemäße Zahnradanordnung mit der ersten Ausführungsform eines erfindungsgemäßen Zahnrades aus Fig. 1 und der zweiten Ausführungsform eines erfindungsgemäßen Zahnrades aus Fig. 2 in einer Vorderansicht, und
- Fig. 4: die Zahnradanordnung aus Fig. 3 in einer perspektivischen Ansicht von schräg vorne.

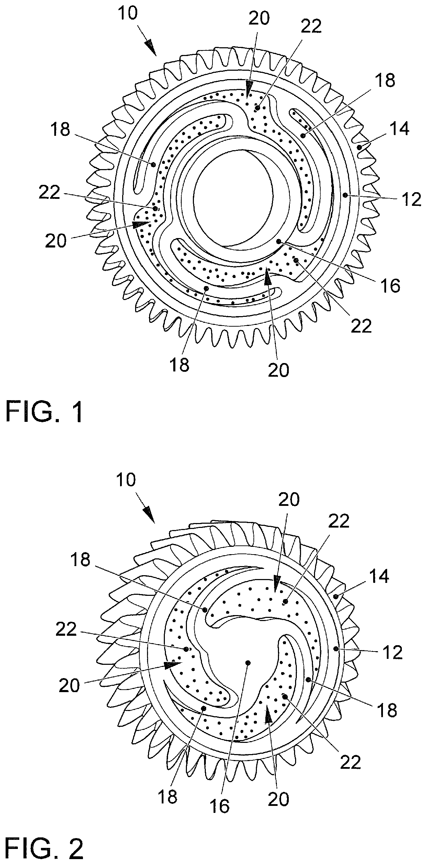

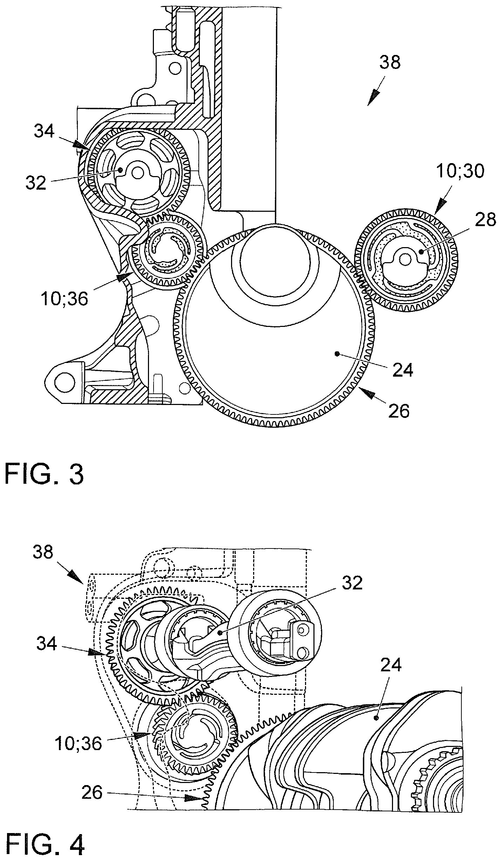

In Fig. 1 ist eine erste Ausführungsform eines Zahnrades 10 dargestellt. Das Zahnrad 10 weist einen äußeren Ring 12 mit einer sich in radialer Richtung außenseitig anschließenden Außenverzahnung 14 auf. Konzentrisch zu dem äußeren Ring 12 und beabstandet zu diesem ist ein innerer Ring 16 ausgebildet. Der innere Ring 16 ist in der in Figur 1 gezeigten Ausführungsform zur Aufnahme und drehfesten Verbindung mit einer Welle vorgesehen, beispielsweise mit einer Ausgleichswelle 28 (vgl. Fig. 3). Zwischen dem inneren Ring 16 und dem äußeren Ring 12 erstrecken sich vorliegend drei Stege 18, deren Haupterstreckungsrichtung - insbesondere in dem mittleren Bereich - überwiegend in Umfangsrichtung verläuft. Die Stege 18 sind insoweit spiralförmig ausgebildet. Sie erstrecken sich in der gezeigten Ausführungsform jeweils über ein Winkelsegment von ca. 110° des Zahnrades 10. Zwischen zwei benachbarten Stegen 18 verbleibt jeweils ein Winkelsegment von ca. 10°, in welchem kein Steg 18 angeordnet ist.

in der gezeigten Ausführungsform sind die Stege 18 so angeordnet, dass sie sich in rein radialer Richtung betrachtet nicht überlappen. Ferner weisen die Stege 18 in den an den äußeren Ring 12 und an den inneren Ring 16 angrenzenden Bereichen jeweils Anbindungsabschnitte auf, die eine überwiegend radiale Haupterstreckungsrichtung aufweisen. Nach Erreichen eines Abstandes von ca. 2,5 mm (in radialer Richtung betrachtet) ändert sich die Haupterstreckungsrichtung in einer überwiegend in Umfangsrichtung orientierte Richtung. Die Stege 18 weisen allesamt einen vollständig stetigen Verlauf auf, d.h. Richtungsänderungen sind ausschließlich über runde Kantenverläufe (Radien) realisiert. Es sind insoweit keine scharfkantigen Konturen im Bereich der Stege 18 ausgebildet.

Die Außenverzahnung 14, der äußere Ring 12, die Stege 18 und der innere Ring 16 sind in der in Figur 1 gezeigten Ausführungsform einstückig aus einem Metallwerkstoff hergestellt, hier aus einem Stahlwerkstoff.

Zwischen den Stegen 18 und dem inneren Ring 16 sowie zwischen den Stegen 18 und dem äußeren Ring 12 sind Freiräume 20 gebildet. Diese erstrecken sich - in Umfangsrichtung betrachtet - in der gezeigten Ausführungsform jeweils über ein Winkelsegment von 180°. Da die Stege 18 gleichmäßig über den Umfang verteilt angeordnet sind, ergeben sich so insgesamt drei Freiräume 20, die jeweils die gleiche Form aufweisen und um 120° zueinander versetzt angeordnet sind.

Die drei Freiräume 20 sind vorliegend vollständig mit einer homogenen Masse aus einem dämpfenden Füllmaterial 22 gefüllt (durch Punkte andeutet). Bei dem Füllmaterial 22 handelt es sich vorliegend um HNBR.

Im Folgenden werden zur Beschreibung weiterer Ausführungsformen für identische oder zumindest funktionsgleiche Elemente die gleichen Bezugszeichen verwendet wie zur Beschreibung der ersten Ausführungsform.

In Fig. 2 ist eine zweite Ausführungsform eines Zahnrades 10 dargestellt. Das Zahnrad 10 weist ebenfalls einen äußeren Ring 12 mit einer Außenverzahnung 14 auf sowie einen inneren Ring 16 mit einem kleineren Durchmesser. Der innere Ring 16 ist vorliegend als geschlossener Ring ausgebildet, d.h. als Vollwelle. Ein solches Zahnrad 10 gemäß dieser zweiten Ausführungsform eignet sich beispielsweise als Zwischenrad 36 (vgl. Fig. 3 und 4), welches in kämmendem Eingriff mit zwei weiteren Zahnrädern (z.B. einem Zahnrad 34 einer Ausgleichswelle 32 und einem Zahnrad 26 einer Kurbelwelle 24) steht.

Diese zweite Ausführungsform des Zahnrades 10 weist ebenfalls drei Stege 18 auf, welche sich über ca. 120° in Umfangsrichtung erstrecken. Dementsprechend ist in jedem Winkelsegment des Zahnrades 10 gemäß der in Fig. 2 gezeigten zweiten Ausführungsform zumindest ein Teil eines Steges 18 angeordnet. Dennoch überlappen sich auch in diesem Fall die Stege 18 in rein radialer Richtung betrachtet nicht. Zwischen den Stegen 18 sind wiederum jeweils Freiräume 20 gebildet, welche mit einem dämpfenden Füllmaterial 22 gefüllt sind, hier mit einem Silikonwerkstoff. Auch hier sind insgesamt drei Freiräume 20 ausgebildet. Diese Freiräume 20 erstrecken sich in dieser Ausführungsform jeweils über einen Winkelbereich von ca. 190°.

Der jeweils äußere Ring 12 der in den Fig. 1 und Fig. 2 gezeigten Ausführungsformen der Zahnräder 10 weist gegenüber dem inneren Ring 16 aufgrund der Federelastizität der Stege 18 eine Elastizität in radialer Richtung auf, die es ermöglicht, das Zahnrad 10 mit einer geeigneten Vorspannung in radialer Richtung in einer Zahnradanordnung einzubauen und so ein während des Betriebes auftretendes Spiel auszugleichen. Dazu finden je nach Auslegung - zumindest partiell - Relativbewegungen zwischen dem äußeren Ring 12 und dem inneren Ring 16 statt, wodurch sich der Abstand zwischen dem äußeren Ring 12 und dem inneren Ring 16 verändert. Bei einer Zunahme einer radial von außen nach innen auf das erfindungsgemäße Zahnrad 10 einwirkenden Kraft kann sich der Abstand zwischen dem äußeren Ring 12 und dem inneren Ring 16 insbesondere verringern.

Die Stege 18 in den in Fig. 1 und Fig. 2 gezeigten Ausführungsformen können derart ausgelegt sein, dass der äußere Ring 12 im Wesentlichen formstabil bleibt, so dass eine Relativbewegung des vollständigen, unverformten äußeren Rings 12 gegenüber dem inneren Ring 16 eine Abstandsverringerung in einem ersten Bereich und eine Abstandsvergrößerung in einem zweiten Bereich zur Folge hat. Alternativ kann die Auslegung auch so erfolgen, dass der äußere Ring 12 eine gewisse Elastizität in radialer Richtung aufweist, so dass überwiegend eine partielle Verringerung des Abstandes zwischen dem äußeren Ring 12 und dem inneren Ring 16 in einem von einer äußeren Kraft belasteten Winkelsegment erfolgt, während der Abstand zwischen dem äußeren Ring 12 und dem inneren Ring 16 in einem gegenüberliegenden Winkelsegment im Wesentlichen unverändert bleiben kann.

Ein besonderer Vorteil der erfindungsgemäßen Zahnräder 10 ist, dass Schwingungen, die in radialer Richtung auf den äußeren Ring 12 des Zahnrades 10 einwirken, über die durch die Stege 18 und den inneren Ring 16 gebildete Tragstruktur aufgenommen werden können und diese Schwingungen jedoch zugleich von dem in den Freiräumen 20 angeordneten Füllmaterial überwiegend absorbiert werden. Dies gilt insbesondere für Körperschall. Geräusche, die im Bereich der Außenverzahnung 14 entstehen, werden mit Hilfe des Füllmaterials sehr effizient absorbiert. Ferner werden die durch die Einwirkung radialer Kräfte bewirkten Schwingungen zwischen dem äußeren Ring 12 und dem inneren Ring 16 mittels des Füllmaterials zusätzlich gedämpft.

In Fig. 3 und Fig. 4 ist eine Zahnradanordnung 38 gezeigt. Die Zahnradanordnung 38 umfasst eine Kurbelwelle 24, welche drehfest mit einem Zahnrad 26 verbunden ist. Die Zahnradanordnung 38 umfasst ferner eine erste Ausgleichswelle 28 und eine zweite Ausgleichswelle 32. Die erste Ausgleichswelle 28 ist mit einem Zahnrad 30 drehfest verbunden und steht direkt mit dem Zahnrad 26 der Kurbelwelle 24 in kämmendem Eingriff, d.h. ist mit diesem gekoppelt. Das mit der zweiten Ausgleichswelle 32 verbundene Zahnrad 34 ist mittelbar über ein Zwischenrad 36 mit dem Zahnrad 26 der Kurbelwelle 24 gekoppelt.

Bei dem Zahnrad 30 der ersten Ausgleichswelle 28 handelt es sich vorliegend um ein erfindungsgemäßes Zahnrad 10 gemäß der ersten Ausführungsform mit spiralförmig ausgebildeten Stegen 18 und dem in den Freiräumen 20 zwischen den Stegen 18 angeordneten dämpfenden Füllmaterial 22 (vgl. auch Fig. 1). Ein etwaiges radiales Spiel zwischen dem Zahnrad 30 der ersten Ausgleichswelle 28 und dem Zahnrad 26 der Kurbelwelle 24, welches sich insbesondere durch Temperaturänderungen ergeben kann, kann von dem erfindungsgemäßen Zahnrad 10 kompensiert werden, ohne dass es dabei zu einer ungewünschten Geräuschbildung kommt.

Bei der vorliegend auf der linken Seite angeordneten zweiten Ausgleichswelle 32, deren Zahnrad 34 über das Zwischenrad 36 mit dem Zahnrad 26 der Kurbelwelle 24 verbunden ist, ist das Zwischenrad 36 ein erfindungsgemäßes Zahnrad 10 gemäß der zweiten Ausführungsform mit sich zumindest teilweise in Umfangsrichtung orientierten Stegen 18 und mit in den Freiräumen 20 zwischen den Stegen 18 angeordnetem dämpfenden Füllmaterial 22. Bei einer Temperaturbelastung dieser Anordnung kann das Zwischenrad 36 eine Veränderung des Spiels zwischen dem Zahnrad 26 der Kurbelwelle 24 und dem Zahnrad 34 der Ausgleichswelle 32 ausgleichen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Insbesondere wird darauf hingewiesen, dass es sich bei den Zahnrädern 10 auch um Zahnräder mit einer Innenverzahnung und/oder mit einer Geradverzahnung handeln kann, wobei die Stege 18 dann zwischen einem äußeren Ring 12 und einem inneren Ring 16 mit einer Innenverzahnung verlaufen. Anstelle der vorstehend erwähnten drehfesten Verbindungen separater Zahnräder können entsprechende Verzahnungen auch einstückig an den entsprechenden Elementen ausgebildet sein.

### Bezugszeichenliste

- 10: Zahnrad
- 12: äußerer Ring
- 14: Außenverzahnung
- 16: innerer Ring
- 18: Steg
- 20: Freiraum
- 22: dämpfendes Füllmaterial
- 24: Kurbelwelle
- 26: Zahnrad (der Kurbelwelle)
- 28: erste Ausgleichswelle
- 30: Zahnrad (der ersten Ausgleichswelle)
- 32: zweite Ausgleichswelle
- 34: Zahnrad (der zweiten Ausgleichswelle)
- 36: Zwischenrad
- 38: Zahnradanordnung

## Patentansprüche

1. Zahnrad für eine Brennkraftmaschine mit einem äußeren Ring (12) und einem inneren Ring (16), wobei zwischen dem äußeren Ring (12) und dem inneren Ring (16) mindestens ein, sich zumindest teilweise in Umfangsrichtung erstreckender Steg (18) zur Erzielung einer Elastizität in radialer Richtung des Zahnrades (10) ausgebildet ist, wodurch in radialer Richtung durch den mindestens einen Steg (18) mindestens ein Freiraum (20) zwischen dem inneren Ring (16) und dem äußeren Ring (12) gebildet ist, wobei der mindestens eine Freiraum (20) zumindest teilweise mit einem dämpfenden Füllmaterial (22) gefüllt ist,
**dadurch gekennzeichnet,**
**dass** der äußere Ring (12), der innere Ring (16) und der mindestens eine Steg (18) einstückig aus einem Metallwerkstoff hergestellt sind.

2. Zahnrad nach dem vorstehenden Anspruch, **dadurch gekennzeichnet, dass** sich der mindestens eine Steg (18) über einen Umfangsbereich von mindestens 20° erstreckt.

3. Zahnrad nach einem der vorstehenden Ansprüche, **dadurch gekennzeichnet, dass** das dämpfende Füllmaterial (22) ein nichtmetallischer Werkstoff ist.

4. Zahnrad nach einem der vorstehenden Ansprüche, **dadurch gekennzeichnet, dass** das Füllmaterial (22) eine homogene Masse mit einer Shore-Härte zwischen 10 und 80 ist.

5. Zahnrad nach einem der vorstehenden Ansprüche, **dadurch gekennzeichnet, dass** die Federsteifigkeit in radialer Richtung des Zahnrades (10) über den gesamten Umfang zwischen 5.000 und 15.000 N/mm beträgt.

6. Zahnrad nach einem der vorstehenden Ansprüche, **dadurch gekennzeichnet, dass** das Füllmaterial (22) in den mindestens einen Freiraum (20) eingespritzt, vulkanisiert und/oder montiert ist.

7. Zahnrad nach einem der vorstehenden Ansprüche, **dadurch gekennzeichnet, dass** der als Füllmaterial (22) eingesetzte Werkstoff ein bis mindestens 150°C temperaturstabiler Werkstoff ist.

8. Zahnrad nach einem der vorstehenden Ansprüche, **dadurch gekennzeichnet, dass** der rein radiale Abstand zwischen dem mindestens einen Steg (18) und dem inneren Ring (16) und/oder der rein radiale Abstand zwischen dem mindestens einen Steg (18) und dem äußeren Ring (12) in sich zumindest teilweise in Umfangsrichtung erstreckenden Bereichen des Steges (18) mindestens 1,5 mm beträgt.

9. Brennkraftmaschine mit einer Kurbelwelle (24) und mindestens einer Ausgleichswelle (28, 32) und mindestens einem Zahnrad (10) nach einem der Ansprüche 1 bis 8, wobei das Zahnrad (10) drehfest mit der Kurbelwelle (24) oder drehfest mit der Ausgleichswelle (28, 32) verbunden ist oder zwischen der Ausgleichswelle (32) und der Kurbelwelle (24) als Zwischenrad (36) angeordnet ist.

## Claims

1. Gear wheel for an internal combustion engine with an outer ring (12) and an inner ring (16), wherein between the outer ring (12) and the inner ring (16) at least one web (18), at least partially extending in the circumferential direction, is formed to achieve an elasticity in the radial direction of the gear wheel (10), whereby at least one free space (20) between the inner ring (16) and the outer ring (12) is formed in the radial direction by the at least one web (18), wherein the at least one free space (20) is at least partially filled with a damping filler material (22),
**characterised in that**
the outer ring (12), the inner ring (16) and the at least one web (18) are produced in one piece from a metallic material.

2. Gear wheel according to the preceding claim, **characterised in that** the at least one web (18) extends over a circumferential region of at least 20°.

3. Gear wheel according to any one of the preceding claims, **characterised in that** the damping filler material (22) is a non-metallic material.

4. Gear wheel according to any one of the preceding claims, **characterised in that** the filler material (22) is a homogeneous mass with a Shore hardness between 10 and 80.

5. Gear wheel according to any one of the preceding claims, **characterised in that** the spring stiffness in the radial direction of the gear wheel (10) over the entire circumference is between 5,000 and 15,000 N/mm.

6. Gear wheel according to any one of the preceding claims, **characterised in that** the filler material (22) is injected, vulcanised and/or mounted in the at least one free space (20).

7. Gear wheel according to any one of the preceding claims, **characterised in that** the material used as filler material (22) is a material which is temperature-stable up to at least 150°C.

8. Gear wheel according to any one of the preceding claims, **characterised in that** the purely radial distance between the at least one web (18) and the inner ring (16) and/or the purely radial distance between the at least one web (18) and the outer ring (12) in regions of the web (18) that extend at least partially in the circumferential direction is at least 1.5 mm.

9. Internal combustion engine with a crankshaft (24) and at least one balancer shaft (28, 32) and at least one gear wheel (10) according to any one of claims 1 to 8, wherein the gear wheel (10) is connected non-rotatably to the crankshaft (24) or non-rotatably to the balancer shaft (28, 32) or is disposed between the balancer shaft (32) and the crankshaft (24) as an intermediate gear (36).

## Revendications

1. Roue dentée pour un moteur à combustion interne comprenant une bague extérieure (12) et une bague intérieure (16), dans laquelle entre la bague extérieure (12) et la bague intérieure (16) au moins une tige (18), s'étendant au moins partiellement dans la direction périphérique pour obtenir une élasticité dans la direction radiale de la roue dentée (10), est formée, dans la direction radiale, au moyen de l'au moins une tige (18), au moins un espace libre (20) est formé entre la bague intérieure (16) et la bague extérieure (12), dans laquelle l'au moins un espace libre (20) est au moins partiellement rempli d'une matière de remplissage (22) amortissant,
**caractérisée en ce que**
la bague extérieure (12), la bague intérieure (16) et l'au moins une tige (18) sont fabriquées d'une seule pièce à partir d'une matière métallique.

2. Roue dentée selon la revendication précédente, **caractérisée en ce que** l'au moins une tige (18) s'étend sur une zone périphérique d'au moins 20 °.

3. Roue dentée selon l'une quelconque des revendications précédentes, **caractérisée en ce que** la matière de remplissage (22) amortissant est une matière non métallique.

4. Roue dentée selon l'une quelconque des revendications précédentes, **caractérisée en ce que** la matière de remplissage (22) est une masse homogène à une dureté Shore dans la plage comprise entre 10 et 80.

5. Roue dentée selon l'une quelconque des revendications précédentes, **caractérisée en ce qu'**une rigidité de ressort dans la direction radiale de la roue dentée (10) sur toute la circonférence est dans la plage comprise entre 5 000 et 15 000 N/mm.

6. Roue dentée selon l'une quelconque des revendications précédentes, **caractérisée en ce que** la matière de remplissage (22) est injectée, vulcanisée et/ou montée dans l'au moins un espace libre (20).

7. Roue dentée selon l'une quelconque des revendications précédentes, **caractérisée en ce que** la matière utilisée en tant que matière de remplissage (22) est une matière stable à la température jusqu'à au moins 150 °C.

8. Roue dentée selon l'une quelconque des revendications précédentes, **caractérisée en ce que** la distance purement radiale entre l'au moins une tige (18) et la bague intérieure (16) et/ou la distance purement radiale entre l'au moins une tige (18) et la bague extérieure (12), dans des zones de la tige (18) s'étendant au moins partiellement dans la direction périphérique, sont supérieures à 1,5 mm.

9. Moteur à combustion interne comprenant un vilebrequin (24) et au moins un arbre d'équilibrage (28, 32) et au moins une roue dentée (10) selon l'une quelconque des revendications 1 à 8, dans lequel la roue dentée (10) est raccordée solidaire en rotation au vilebrequin (24) ou raccordée solidaire en rotation à l'arbre d'équilibrage (28, 32) ou est agencée entre l'arbre d'équilibrage (32) et le vilebrequin (24) en tant que roue intermédiaire (36).
